# EUROPÄISCHE PATENTSCHRIFT

(11) **EP 3 895 384 B1**
(45) Veröffentlichungstag und Bekanntmachung des Hinweises auf die Patenterteilung: **07.09.2022**
(21) Anmeldenummer: 19829008.2
(22) Anmeldetag: 11.12.2019
(51) Int. Cl.: H04L 12/40, H04L 12/413

(54) **ÜBERLAGERUNGSERFASSUNGSEINHEIT FÜR EINE TEILNEHMERSTATION EINES SERIELLEN BUSSYSTEMS UND VERFAHREN ZUR KOMMUNIKATION IN EINEM SERIELLEN BUSSYSTEM**
OVERLAP DETECTION UNIT FOR A SUBSCRIBER STATION OF A SERIAL BUS SYSTEM, AND METHOD FOR COMMUNICATING IN A SERIAL BUS SYSTEM
UNITÉ DE DÉTECTION DE RECOUVREMENT POUR UN POSTE D'ABONNÉ D'UN SYSTÈME DE BUS SÉRIE ET PROCÉDÉ DE COMMUNICATION DANS UN SYSTÈME DE BUS SÉRIE

(30) Priorität: 13.12.2018 DE 102018221679
(43) Veröffentlichungstag der Anmeldung: 20.10.2021
(73) Patentinhaber: Robert Bosch GmbH, 70442 Stuttgart (DE)
(72) Erfinder: WALKER, Steffen, 72770 Reutlingen (DE); MUTTER, Arthur, 73765 Neuhausen (DE)
(86) Internationale Anmeldenummer: PCT/EP2019/084599
(87) Internationale Veröffentlichungsnummer: WO 2020/120550

(56) Entgegenhaltungen:
- DE-A1-102018 202 165
- DE-A1-102018 202 170
- US-A1- 2018 034 658

## Beschreibung

Die vorliegende Erfindung betrifft eine Überlagerungserfassungseinheit für eine Teilnehmerstation eines seriellen Bussystems und ein Verfahren zur Kommunikation in einem seriellen Bussystem, mit welchen eine Kommunikation in dem Bussystem gemäß wahlweise einem ersten Kommunikationsprotokoll oder einem zweiten Kommunikationsprotokoll möglich ist, wobei die Kommunikation gemäß dem zweiten Kommunikationsprotokoll mit einer höheren Bitrate als mit dem ersten Kommunikationsprotokoll und mit einem anderen Physical Layer erfolgt.

### Stand der Technik

Derzeit wird für die Kommunikation zwischen Sensoren und Steuergeräten, beispielsweise in Fahrzeugen, immer häufiger ein Bussystem eingesetzt, in welchem Daten als Nachrichten im Standard ISO11898-1:2015 als CAN Protokoll-Spezifikation mit CAN FD übertragen werden. Die Nachrichten werden zwischen den Teilnehmerstationen des Bussystems, wie Sensor, Steuergerät, Geber, usw., übertragen. Hierbei wird CAN FD derzeit in der Einführungsphase im ersten Schritt meist mit einer Daten-Bitrate von 2Mbit/s bei der Übertragung von Bits des Datenfelds und mit einer Arbitrations-Bitrate von 500kbit/s bei der Übertragung aller anderen Bits, insbesondere der Bits des Arbitrationsfelds, im Fahrzeug eingesetzt.

Sowohl bei der Übertragung des Arbitrationsfelds als auch bei der Übertragung des Datenfelds wird derselbe Physical Layer verwendet, welcher der Bitübertragungsschicht oder Schicht 1 des bekannten OSI-Modells (Open Systems Interconnection Modell) entspricht. Dabei werden zwei Buszustände unterschieden, nämlich "dominant" (entspricht der logischen bzw. digitalen 0) und "rezessiv" (entspricht der logischen bzw. digitalen 1). Da der rezessive Buszustand nicht aktiv getrieben wird, kann der rezessive Buszustand von dem dominanten Buszustand überschrieben werden, wodurch die Arbitration ermöglicht wird. Jedoch wird der rezessive Buszustand nur relativ langsam durch Abschlusswiderstände des Bussystems eingestellt. Dies verhindert auf der einen Seite eine schnellere Datenübertragung. Auf der anderen Seite gewährleistet die Arbitration gemäß dem oben genannten Standard ISO11898-1:2015 jedoch, dass während der Übertragung des Datenfelds nur eine der Teilnehmerstationen ihre Daten exklusiv und kollisionsfrei sendet. Dadurch sind Daten nach der Arbitration sicherer ohne Notwendigkeit der Wiederholung über den Bus übertragbar. Dies trägt insgesamt mit zu einer Beschleunigung der Datenübertragung bei.

Soll also der Vorteil der Arbitration beibehalten werden und dennoch die Übertragungsrate noch weiter als bisher erhöht werden, muss eine Lösung gefunden werden, welche die Nachteile der langsamen Übertragungsrate bei der Arbitration gemäß dem oben genannten Standard ISO11898-1:2015 vermindert. Dabei soll für eine einfache Migration bestehender Bussysteme außerdem ermöglicht werden, dass Teilnehmerstationen, die noch gemäß den bestehenden CAN-Protokoll-Spezifikationen arbeiten, im Bussystem auch mit Teilnehmerstationen koexistieren können, die bereits gemäß einer Nachfolge-CAN-Protokoll-Spezifikation kommunizieren.

Aus dem Stand der Technik sind Transceiver mit ähnlichen Eigenschaften bekannt. Die US 2018/034658 A1 offenbart beispielsweise ein Gerät mit mindestens einen Transceiver, der so konfiguriert ist, dass er mindestens ein Datensignal über ein gemeinsam genutztes physikalisches Medium sendet oder empfängt. Das physikalische Medium umfasst einen Bus, der so konfiguriert ist, dass er mit mehreren Geräten, einschließlich der Vorrichtung, gekoppelt werden kann und eine Multi-Drop-Fähigkeit bietet. Der mindestens eine Transceiver ist so konfiguriert, dass er das mindestens eine Datensignal mit einer Rate von mehr als 10 Mbps sendet oder empfängt.

### Offenbarung der Erfindung

Daher ist es Aufgabe der vorliegenden Erfindung, eine Überlagerungserfassungseinheit für eine Teilnehmerstation eines seriellen Bussystems und ein Verfahren zur Kommunikation in einem seriellen Bussystem bereitzustellen, welche die zuvor genannten Probleme lösen. Insbesondere sollen eine Überlagerungserfassungseinheit für eine Teilnehmerstation eines seriellen Bussystems und ein Verfahren zur Kommunikation in einem seriellen Bussystem bereitgestellt werden, bei welchen auch eine Koexistenz von Teilnehmerstationen möglich ist, die gemäß dem Standard ISO11898-1:2015 oder gemäß einer Nachfolge-CAN-Protokoll-Spezifikation kommunizieren.

Die Aufgabe wird durch eine Überlagerungserfassungseinheit für eine Teilnehmerstation eines seriellen Bussystems mit den Merkmalen von Anspruch 1 gelöst. Die Überlagerungserfassungseinheit hat einen Kollisionserfassungsblock zur Erfassung von Buszuständen auf einem Bus des Bussystems, bei welchem Buszustände von Teilnehmerstationen des Bussystems zum Senden einer Nachricht in einer ersten Kommunikationsphase auf dem Bus mit einem ersten Physical Layer erzeugt werden und in einer zweiten Kommunikationsphase mit einem zweiten Physical Layer erzeugt werden können, der sich von dem ersten Physical Layer unterscheidet, wobei der Kollisionserfassungsblock zur Erzeugung eines Signals ausgestaltet ist, dessen Wert angibt, ob die Buszustände in der zweiten Kommunikationsphase einen Pegel haben, der einer Überlagerung des ersten und zweiten Physical Layers oder einer Überlagerung von zwei zweiten Physical Layern entspricht oder nicht, und wobei der Kollisionserfassungsblock zur Ausgabe des Signals für die Teilnehmerstation ausgestaltet ist.

Hierbei bedeutet "Überlagerung des ersten und zweiten Physical Layers", dass wenigstens ein Buszustand beobachtet wird, welcher einer Überlagerung von einem oder mehreren Buszuständen, die durch eine erste Teilnehmerstation mittels der ersten Physical Layer erzeugt werden, mit einem oder mehreren Buszuständen, die durch eine zweite Teilnehmerstation mittels der zweiten Physical Layer erzeugt werden, entspricht.

Weiterhin bedeutet "Überlagerung von zwei zweiten Physical Layern", dass wenigstens ein Buszustand beobachtet wird, welcher einer Überlagerung von einem oder mehreren Buszuständen, die durch eine dritte Teilnehmerstation mittels der zweiten Physical Layer erzeugt werden, mit einem oder mehreren Buszuständen, die durch eine vierte Teilnehmerstation mittels der zweiten Physical Layer erzeugt werden, entspricht.

Mit der Überlagerungserfassungseinheit wird ermöglicht, dass erste Teilnehmerstationen des Bussystems, die in einer ersten Kommunikationsphase das gleiche Kommunikationsformat verwenden wie zweite Teilnehmerstationen, jedoch in einer zweiten Kommunikationsphase ein anderes Kommunikationsformat verwenden als die zweiten Teilnehmerstationen, die Kommunikation der zweiten Teilnehmerstationen zwar stören können, jedoch die Störung schnell behoben werden kann. Hierfür kann die Überlagerungserfassungseinheit auf dem Bus eine Überlagerung von Physical Layern erfassen, die beispielsweise durch Überlagerung von gesendeter Nachricht mit Fehlerrahmen (Error-Flags) auftritt. Hierbei wurden die Fehlerrahmen gesendet, da eine Teilnehmerstation des Bussystems nicht erfasst hat, dass derzeit eine Kommunikation der zweiten Teilnehmerstationen mit einem Kommunikationsformat stattfindet, das sich von dem Kommunikationsformat des gesendeten Fehlerrahmens unterscheidet. Insbesondere kann die Überlagerungserfassungseinheit Fehlerrahmen (Error-Flags) erfassen, welche in einem Kommunikationsformat auf den Bus gesendet werden, das sich von dem Kommunikationsformat unterscheidet, in welchem die eigene Teilnehmerstation derzeit in der zweiten Kommunikationsphase auf den Bus sendet.

Die Überlagerungserfassungseinheit stellt also die benötigte Information bereit, dass die eigene Sende- / Empfangseinrichtung sofort das Treiben eines Signals für den Rahmen auf den Bus in der zweiten Kommunikationsphase des Rahmens einstellen kann. Dadurch werden/wird ein Kurzschluss und/oder hohe Ströme auf dem Bus vermieden. Darüber hinaus kann die Sende-/ Empfangseinrichtung die Information über den erfassten Fehlerrahmen an die eigene Kommunikationssteuereinrichtung weitergeben, damit auch die eigene Kommunikationssteuereinrichtung das Senden und/oder Empfangen des Rahmens abbricht.

Die Überlagerungserfassungseinheit ist jedoch derart ausgestaltet, dass die Verwendung von Fehlerrahmen (Error-Flags) in der Arbitrationsphase als erster Kommunikationsphase möglich ist.

Somit ist in einer ersten Kommunikationsphase eine von CAN bekannte Arbitration durchführbar und dennoch in einer zweiten Kommunikationsphase die Übertragungsrate gegenüber CAN FD beträchtlich steigerbar. Dadurch kann auch bei Verwendung von unterschiedlichen Physical Layern in der Datenphase als der zweiten Kommunikationsphase eine Kommunikation von Fehlern via Fehlerrahmen (Error-Flags) in der Arbitrationsphase und der Datenphase durchgeführt werden.

Die Teilnehmerstation ermöglicht, dass durch ein Senden des in CAN FD vorhandenen "res-Bit:=1" zu einem neuen Rahmenformat umgeschaltet werden kann und danach aufgrund der Überlagerungserfassungseinheit Fehler aufgrund von Überlagerung von Physical Layer Signalen erkannt werden und an den eigenen Knoten kommuniziert werden können, um den Fehler zu behandeln.

Durch die Koexistenz und Interoperabilität von Teilnehmerstationen, die gemäß dem CAN FD -Kommunikationsprotokoll arbeiten, und Teilnehmerstationen, die gemäß einem CAN FD Nachfolger-Kommunikationsprotokoll arbeiten, das nachfolgend CAN NG genannt ist, ist ein nahtloser Migrationspfad von CAN FD zu CAN NG hin möglich. Somit können einzelne Teilnehmerstationen des Bussystems, die weiterhin nur CAN FD verwenden sollen, unverändert bleiben, wohingegen die CAN NG Teilnehmerstationen, die auch CAN FD Rahmen senden und empfangen können, mit der Überlagerungserfassungseinheit ausgestattet werden. Daher sind keine Gateways zwischen CAN FD und CAN NG Bussystemen erforderlich.

Die zuvor beschriebene Überlagerungserfassungseinheit kann einen Busfehler ohne Datenüberhang (Daten-Overhead) erkennen. Daher muss die korrekte Formatumschaltung aller Teilnehmerstationen nicht in mindestens einem Bit des Rahmens codiert werden, um die korrekte Formatumschaltung abprüfen zu können. Dadurch bietet die Überlagerungserfassungseinheit eine sehr effiziente und robuste Möglichkeit, mit Busfehlern aufgrund und/oder während der Formatumschaltung eines Rahmens umzugehen. Dadurch wird ein großer Datenüberhang in jedem Rahmen vermieden. Ein solcher Datenüberhang wäre noch dazu nachteilig, da Busfehler bei CAN praktisch nicht auftreten, jedoch nicht auszuschließen und daher zu behandeln sind.

Vorteilhafte weitere Ausgestaltungen der Überlagerungserfassungseinheit sind in den abhängigen Ansprüchen angegeben.

Gemäß einer Option ist der Kollisionserfassungsblock ausgestaltet zu erfassen, ob Bits für einen Rahmen der Nachricht andere Pegel haben als die Pegel in der zweiten Kommunikationsphase üblicherweise haben. Alternativ oder zusätzlich ist der Kollisionserfassungsblock ausgestaltet zu erfassen, ob in der zweiten Kommunikationsphase für ein digitales Signal für einen Rahmen der Nachricht zwei verschiedene Buszustände auf dem Bus vorkommen oder nicht.

Möglicherweise ist der Kollisionserfassungsblock ausgestaltet, eine Plausibilisierung einer erfassten Überlagerung durchzuführen, um zu entscheiden, ob der Wert des Signals auf einen Wert zu setzen ist, der eine Überlagerung anzeigt.

Denkbar ist, dass der Kollisionserfassungsblock ausgestaltet ist, die Plausibilisierung mit Hilfe von mindestens zwei verschiedenen Varianten durchzuführen, die unterschiedlich gewichtet werden, um zu entscheiden, ob die Überlagerung auftritt oder nicht.

Denkbar ist zudem, dass die Überlagerungserfassungseinheit außerdem einen Empfangssignal-Auswahlblock zur Auswahl eines Empfangssignals auf der Grundlage des von dem Kollisionserfassungsblock erzeugten Signals und zur Ausgabe des ausgewählten Empfangssignals an eine Kommunikationssteuereinrichtung der Teilnehmerstation aufweist.

Die zuvor beschriebene Überlagerungserfassungseinheit hat gemäß einer speziellen Ausführungsvariante einen Datenphase-Erfassungsblock zur Erfassung der Datenphase der auf dem Bus seriell übertragenen Nachricht, und/oder einen Sender-Erfassungsblock zur Erfassung, ob die Teilnehmerstation derzeit der Sender der Nachricht ist oder nicht, wobei der Kollisionserfassungsblock ausgestaltet ist, das Signal als Reaktion auf mindestens ein Erfassungsergebnis zu erzeugen, das der Kollisionserfassungsblock von dem Datenphase -Erfassungsblock und/oder dem Sender-Erfassungsblock empfangen hat.

Gemäß einer Option ist der Datenphase-Erfassungsblock ausgestaltet, zur Erfassung der Datenphase einen Zustand auf dem Bus zu erfassen. Gemäß einer anderen Option ist der Datenphase -Erfassungsblock ausgestaltet, zur Erfassung der Datenphase ein digitales Empfangssignal auszuwerten, das aus der vom Bus empfangenen Nachricht erzeugt wird.

Möglicherweise ist der Sender-Erfassungsblock ausgestaltet, ein Sendesignal auszuwerten, das von der Teilnehmerstation zu dem Bus gesendet wird. Hierbei kann der Sender-Erfassungsblock ausgestaltet sein, zur Auswertung des Sendesignals Flankenwechsel des Sendesignals zu zählen. Alternativ oder zusätzlich kann der Sender-Erfassungsblock ausgestaltet sein, zur Auswertung des Sendesignals eine sequentielle Dekodierung des Sendesignals auszuführen. Alternativ oder zusätzlich kann der Sender-Erfassungsblock ausgestaltet sein, zur Auswertung des Sendesignals das Sendesignal mit einem digitalen Empfangssignal zu vergleichen, das aus der vom Bus empfangenen Nachricht erzeugt wird.

Möglicherweise wird in einer ersten Kommunikationsphase zur Übertragung der Nachricht auf den Bus zwischen den Teilnehmerstationen des Bussystems ausgehandelt, welche der Teilnehmerstationen in einer nachfolgenden zweiten Kommunikationsphase zumindest zeitweise einen exklusiven, kollisionsfreien Zugriff auf den Bus des Bussystems hat, wobei die zweite Kommunikationsphase eine Datenphase ist, in welcher Nutzdaten der Nachricht auf dem Bus übertragen werden.

Die zuvor beschriebene Überlagerungserfassungseinheit kann Teil einer Teilnehmerstation für ein serielles Bussystem sein, wobei die Teilnehmerstation zudem aufweist eine Kommunikationssteuereinrichtung zum Senden einer Nachricht zu einem Bus des Bussystems und/oder zum Empfangen einer Nachricht von dem Bus des Bussystems, und eine Sende- / Empfangseinrichtung zum Senden der Nachricht auf den Bus und/oder Empfangen der Nachricht von dem Bus, wobei die Überlagerungserfassungseinheit mit der Kommunikationssteuereinrichtung und der Sende- / Empfangseinrichtung verschaltet ist, wobei die Sende- / Empfangseinrichtung ausgestaltet ist, beim Senden mit einer ersten Bitrate, einen ersten Buszustand für einen ersten digitalen Datenzustand der Nachrichten zu erzeugen und einen zweiten Buszustand für den zweiten digitalen Datenzustand der Nachrichten derart zu erzeugen, dass der zweite Buszustand den ersten Buszustand überschreiben kann, und wobei die Sende- / Empfangseinrichtung ausgestaltet ist, beim Senden mit einer zweiten Bitrate, die höher ist als die erste Bitrate, unterschiedliche Buszustände derart zu erzeugen, dass die Buszustände für die unterschiedlichen digitalen Datenzustände der Nachrichten einander nicht überschreiben können.

Zudem kann die Sende- / Empfangseinrichtung ausgestaltet sein, beim Senden mit der zweiten Bitrate unterschiedliche Buszustände derart zu erzeugen, dass die Buszustände für die unterschiedlichen digitalen Datenzustände der Nachrichten einander nicht überschreiben können, oder beim Senden mit der zweiten Bitrate die unterschiedlichen Buszustände zu erzeugen wie beim Senden mit der ersten Bitrate.

Mindestens zwei zuvor beschriebene Teilnehmerstationen können Teil eines Bussystems sein, das zudem einen Bus aufweist, so dass die mindestens zwei Teilnehmerstationen über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Das zuvor beschriebene Bussystem hat möglicherweise zudem mindestens eine zusätzliche Teilnehmerstation, welche zur Übertragung der Nachricht auf dem Bus nur ausgestaltet ist, in einer ersten und zweiten Kommunikationsphase der Nachricht Buszustände derart auf dem Bus zu erzeugen, dass der zweite Buszustand den ersten Buszustand überschreiben kann, wobei die mindestens eine zusätzliche Teilnehmerstation über den Bus mit den mindestens zwei Teilnehmerstationen derart verbunden ist, dass die Teilnehmerstationen seriell miteinander kommunizieren können.

Die zuvor genannte Aufgabe wird zudem durch ein Verfahren zur Kommunikation in einem seriellen Bussystem nach Anspruch 15 gelöst. Das Verfahren hat die Schritte: Senden, mit einer Sende- / Empfangseinrichtung, von Nachrichten auf einen Bus des Bussystems, bei welchem Buszustände von Teilnehmerstationen des Bussystems zum Senden einer Nachricht in einer ersten Kommunikationsphase auf dem Bus mit einem ersten Physical Layer erzeugt werden und in einer zweiten Kommunikationsphase mit einem zweiten Physical Layer erzeugt werden, der sich von dem ersten Physical Layer unterscheidet, und/oder Empfangen, mit der Sende- / Empfangseinrichtung, von Nachrichten von dem Bus des Bussystems, Erfassen, mit einem Kollisionserfassungsblock, von Buszuständen auf dem Bus des Bussystems, Erzeugen, mit dem Kollisionserfassungsblock, eines Signals, dessen Wert angibt, ob die Buszustände in der zweiten Kommunikationsphase einen Pegel haben, der einer Überlagerung des ersten und zweiten Physical Layers oder einer Überlagerung von zwei zweiten Physical Layern entspricht oder nicht, und Ausgeben, mit dem Kollisionserfassungsblock, des Signals für die Teilnehmerstation.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von Teilnehmerstationen des Bussystems gemäß dem ersten Ausführungsbeispiel gesendet werden können;
Fig. 3 ein Schaubild zur Veranschaulichung des Aufbaus einer Überlagerungserfassungseinheit, die bei Teilnehmerstationen des Bussystems gemäß dem ersten Ausführungsbeispiel eingebaut ist; und
Fig. 4 ein Signalzeitdiagramm für verschiedene Signale, die im Betrieb des Bussystems gemäß dem ersten Ausführungsbeispiel gesendet werden.

In den Figuren sind gleiche oder funktionsgleiche Elemente, sofern nichts Anderes angegeben ist, mit denselben Bezugszeichen versehen.

### Beschreibung der Ausführungsbeispiele

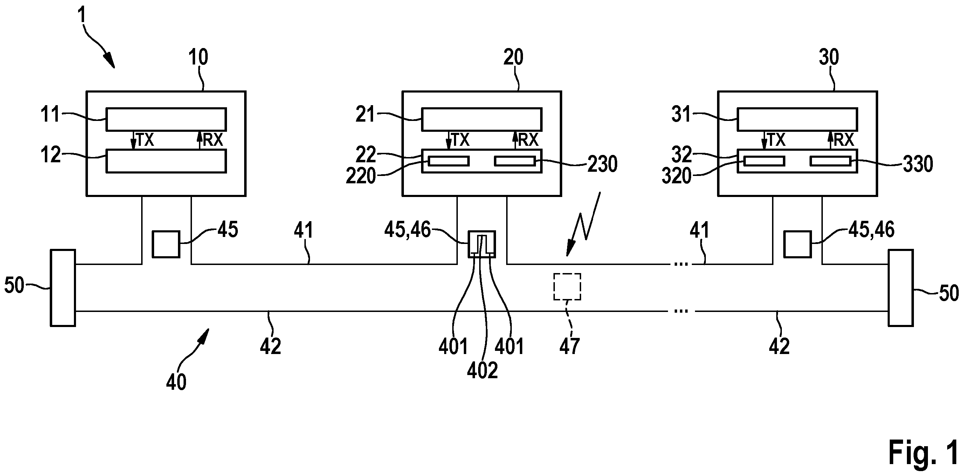

Fig. 1 zeigt als Beispiel ein Bussystem 1, das insbesondere grundlegend für ein CAN-Bussystem, ein CAN FD-Bussystem, ein CAN FD-Nachfolgebussystem, das auch als CAN NG Bussystem bezeichnet wird, und/oder Abwandlungen davon, ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Der Bus 40 ist an seinen beiden Enden mit Abschlusswiderständen 50 abgeschlossen. Die Busadern 41, 42 können auch CAN_H und CAN_L genannt werden und dienen, unter Verwendung eines TX-Signals im Sendezustand, zur elektrischen Signalübertragung nach Einkopplung der dominanten Pegel bzw. Zustände 401 oder Erzeugung bzw. aktivem Treiben von rezessiven Pegeln bzw. Zuständen 402. Die Zustände 401, 402 sind nur bei der Teilnehmerstation 20 sehr schematisch gezeigt. Die Zustände 401, 402 entsprechen den Zuständen eines TX-Signals einer sendenden Teilnehmerstation 10, 20, 30. Nach Übertragung der Signale CAN_H und CAN_L auf den Busadern 41, 42 werden die Signale von den Teilnehmerstationen 10, 20, 30 als ein RX-Signal empfangen. Über den Bus 40 sind Nachrichten 45, 46 in der Form der Signale CAN_H und CAN_L zwischen den einzelnen Teilnehmerstationen 10, 20, 30 seriell übertragbar. Tritt bei der Kommunikation auf dem Bus 40 ein Fehler auf, wie durch den gezackten schwarzen Blockpfeil in Fig. 1 dargestellt, wird in der Regel ein Fehlerrahmen 47 (Error Flag) gesendet. Die Teilnehmerstationen 10, 20, 30 sind beispielsweise Steuergeräte, Sensoren, Anzeigevorrichtungen, usw. eines Kraftfahrzeugs.

Wie in Fig. 1 gezeigt, hat die Teilnehmerstation 10 eine Kommunikationssteuereinrichtung 11 und eine Sende- / Empfangseinrichtung 12. Die Teilnehmerstation 20 hat dagegen eine Kommunikationssteuereinrichtung 21 und eine Sende- / Empfangseinrichtung 22 mit einer Sende- / Empfangseinheit 220 und einer Überlagerungserfassungseinheit 230. Die Teilnehmerstation 30 hat eine Kommunikationssteuereinrichtung 31 und eine Sende-/ Empfangseinrichtung 32 mit einer Sende- / Empfangseinheit 320 und einer Überlagerungserfassungseinheit 330. Die Sende- / Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit einer anderen Teilnehmerstation der Teilnehmerstationen 10, 20, 30, die an den Bus 40 angeschlossen sind.

Die Kommunikationssteuereinrichtung 11 kann wie ein herkömmlicher CAN FD-Controller ausgeführt sein. Die Kommunikationssteuereinrichtung 11 erstellt und liest erste Nachrichten 45, die beispielsweise CAN FD Nachrichten sind. Die CAN FD Nachricht 45 ist gemäß dem CAN FD Format aufgebaut, bei welcher eine Anzahl von bis zu 64 Datenbytes umfasst sein können, die mit einer deutlich schnelleren und damit höheren Datenrate als bei einer Classical CAN-Nachricht übertragen werden. Die Sende- / Empfangseinrichtung 12 kann wie ein herkömmlicher CAN FD Transceiver ausgeführt sein. Somit ist eine Umrüstung der Teilnehmerstation 10 in dem Bussystem 1 nicht erforderlich, auch wenn in dem Bussystem 1 auch die CAN NG Teilnehmerstationen 20, 30 betrieben werden.

Jede der Kommunikationssteuereinrichtungen 21, 31 erstellen und/oder lesen die ersten Nachrichten 45 oder zweite Nachrichten 46. Die zweiten Nachrichten 46 sind auf der Grundlage eines CAN NG-Formats aufgebaut, das nachfolgend detaillierter beschrieben ist. Jede der Sende- / Empfangseinrichtungen 22, 32 hat eine CAN Sende- / Empfangseinheit 220, 320, die je nach Bedarf eine der zuvor beschriebenen ersten Nachrichten 45 im CAN FD Format oder eine zweite Nachricht 46 gemäß dem CAN NG-Format für die zugehörige Kommunikationssteuereinrichtung 21, 31 bereitstellen oder von dieser empfangen kann. Zusätzlich sind die nachfolgend noch genauer beschriebenen Überlagerungserfassungseinheiten 230, 330 umfasst.

Mit den beiden Teilnehmerstationen 20, 30 ist eine Bildung und dann Übertragung von Nachrichten 46 mit dem CAN NG Format sowie der Empfang solcher Nachrichten 46 realisierbar.

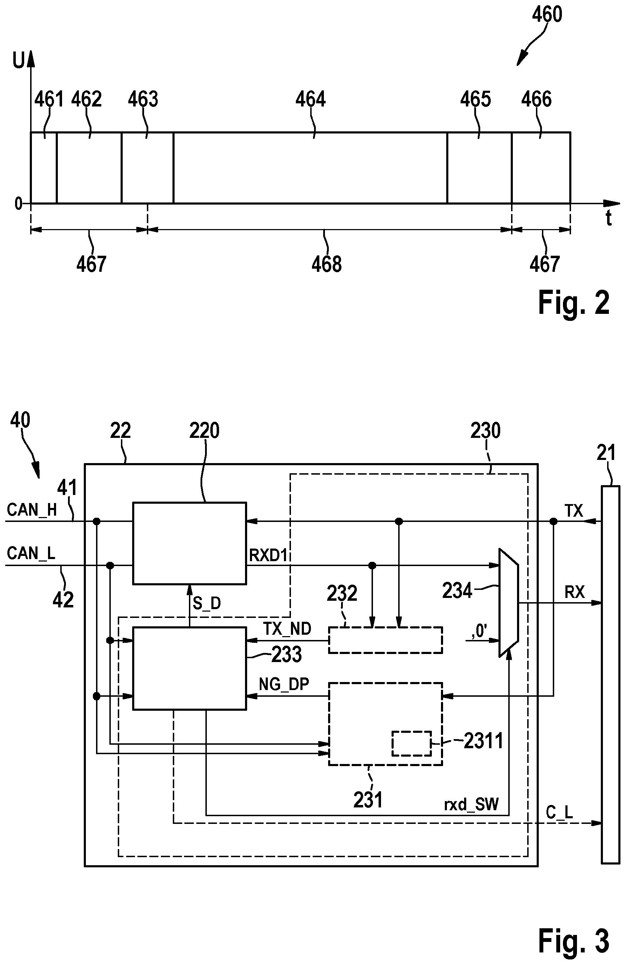

Fig. 2 zeigt für die Nachricht 46 einen CAN NG Rahmen 460, wie er von der Sende- / Empfangseinrichtung 22 oder der Sende- / Empfangseinrichtung 32 infolge eines TX-Signals als Differenzsignal auf den Bus 40 gesendet wird oder vom Bus empfangen wird, woraus das RX-Signal erzeugt wird. Der CAN NG-Rahmen 460 ist für die CAN-Kommunikation auf dem Bus 40 in unterschiedliche Felder unterteilt, nämlich ein Startfeld 461, ein Arbitrationsfeld 462, ein Steuerfeld 463, ein Datenfeld 464, ein Prüfsummenfeld 465 und ein Endefeld 466. Ein Rahmen für die erste Nachricht 45 ist bis auf die nachfolgend beschriebenen Unterschiede des Steuerfelds 463 wie der Rahmen 460 aufgebaut. Eine Datenphase 468 beginnt nach einem bestimmten Bit des Steuerfelds 463, mit welchem von der Arbitrationsphase auf die Datenphase 468 umgeschaltet wird. Somit umfasst die Datenphase 468 einen Teil des Steuerfelds 463 und das Datenfeld 464 sowie das Prüfsummenfeld 465. Alle anderen Felder des Rahmens 460 sind Teil der Arbitrationsphase 467.

Das Startfeld 461 hat beispielsweise ein Bit, das auch SOF-Bit genannt wird und den Beginn des Rahmens bzw. Start of Frame anzeigt. In dem Arbitrationsfeld 462 ist ein Identifizierer mit beispielsweise 32 Bit zur Identifikation des Senders der Nachricht enthalten.

Das Arbitrationsfeld 462 und/oder das Steuerfeld 463 kann zusätzlich eine aus einem oder mehreren Bits bestehende Protokollformatinformation enthalten, welche geeignet ist, CAN NG-Rahmen gegenüber CAN-Rahmen oder CAN FD-Rahmen zu unterscheiden. Die nachfolgende Beschreibung geht jedoch davon aus, dass der CAN NG Rahmen (zweite Nachricht 46) bis zum FDF-Bit identisch zu dem Rahmenformat bei CAN FD (erste Nachricht 45) ist.

Das Steuerfeld 463 hat eine aus einem oder mehreren Bits bestehende Protokollformatinformation, welche zuvor genannt ist und welche geeignet ist, CAN NG-Rahmen gegenüber Classical CAN-Rahmen oder CAN FD-Rahmen zu unterscheiden. In dem Steuerfeld 463 ist ein beispielsweise 12 Bit langer Datenlängecode (Data-Length-Code) enthalten, der zum Beispiel Werte von 1 bis zu 4096 mit der Schrittweite von 1 annehmen kann, oder alternativ Werte von 0 bis 4095 annehmen kann. Der Datenlängecode kann alternativ weniger oder mehr Bits umfassen und der Wertebereich und die Schrittweite können andere Werte annehmen.

In dem Datenfeld 464 sind die Nutzdaten des CAN-NG-Rahmens bzw. der Nachricht 46 enthalten. Die Nutzdaten können entsprechend dem Wertebereich des Datenlängecodes beispielsweise bis zu 64 Bytes oder 4096 Bytes oder eine beliebige andere Anzahl von Bytes aufweisen.

In dem Prüfsummenfeld 465 ist eine Prüfsumme über die Daten in dem Datenfeld 464 einschließlich der Stuffbits enthalten, die vom Sender der Nachricht 46 nach z.B. jeweils 5 oder 10 gleichen Bits als inverses Bit eingefügt werden.

In dem Endefeld 466 kann mindestens ein Acknowledge-Bit und ein Negativ Acknowledge-Bit enthalten sein und außerdem eine Folge von 11 gleichen Bits, welche das Ende E des CAN NG Rahmens 460 anzeigen. Mit dem mindestens einen Acknowledge-Bit kann der sendenden Teilnehmerstation mitgeteilt werden, dass ein Empfänger den empfangenen CAN NG Rahmen 460 bzw. die Nachricht 46 korrekt empfangen hat, mit dem Negative Acknowledge-Bit kann der sendenden Teilnehmerstation mitgeteilt werden, ob ein Empfänger in dem empfangenen CAN NG Rahmen 460 bzw. der Nachricht 46 einen Fehler, der auch als Empfangsfehler bezeichnet werden kann, entdeckt hat oder nicht.

In der Arbitrationsphase 467 wird ein Physical Layer wie bei Classical CAN und CAN FD verwendet. Ein wichtiger Punkt während dieser Phase ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden und die Kommunikationsbandbreite wird sehr effizient genutzt, was sehr vorteilhaft ist.

Das CSMA/CR-Verfahren hat zur Folge, dass es sogenannte rezessive Zustände 402 auf dem Bus 40 geben muss, welche von anderen Teilnehmerstationen 10, 20, 30 mit dominanten Zuständen 401 auf dem Bus 40 überschrieben werden können. Im rezessiven Zustand 402 herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2Megabit pro Sekunde im realen Fahrzeug-Einsatz.

Das Steuerfeld 463 und das Datenfeld 464 werden von einem Sender der Nachricht 46 erst auf den Bus 40 gesendet, wenn die Teilnehmerstation 20 oder die Teilnehmerstation 30 als der Sender die Arbitration gewonnen hat und die Teilnehmerstation 20 oder 30 als Sender damit zum Senden der Felder 463 bis 465 einen exklusiven Zugriff auf den Bus 40 des Bussystems 1 hat. Bei der Arbitration wird mit Hilfe des Identifizierers in dem Arbitrationsfeld 462 bitweise zwischen den Teilnehmerstationen 10, 20, 30 ausgehandelt, welche Teilnehmerstation 10, 20, 30 die Nachricht 45, 46 mit der höchsten Priorität senden darf und daher für die nächste Zeit zum Senden der Felder 463 bis 465 den exklusiven Zugriff auf den Bus 40 des Bussystems 1 bekommt.

Die Arbitration am Anfang eines Rahmens 460 bzw. der Nachricht 45, 46 und das Acknowledgement in dem Endefeld 466 am Ende E des Rahmens 460 bzw. der Nachricht 45, 46 ist nur dann möglich, wenn die Bitzeit deutlich mehr als doppelt so lang ist wie die Signal-Laufzeit zwischen zwei beliebigen Teilnehmerstationen 10, 20, 30 des Bussystems 1. Daher wird die Bitrate in der Arbitrationsphase 467 bei Übertragung der Felder 461, 462, 463 teilweise und 466 langsamer und damit niedriger gewählt als in den übrigen Feldern des Rahmens 460. Insbesondere wird in der Praxis die Bitrate in der Arbitrationsphase als 500 kbit/s gewählt, woraus eine Bitzeit von ca. 2µs folgt, wohingegen die Bitrate in der Datenphase 468 als beispielsweise 5 bis 8 Mbit/s oder größer gewählt wird, woraus eine Bitzeit von ca. 0,2µs und kürzer folgt. Somit ist die Bitzeit des Signals in der Arbitrationsphase 467 um beispielsweise den Faktor 10 oder 16, usw. größer als die Bitzeit des Signals in Datenphase 468. Der Faktor für die Bitzeit ist beliebig wählbar.

Jede der Teilnehmerstationen 10, 20, 30 kann CAN FD Rahmen senden und empfangen, die Teilnehmerstation 10 kann jedoch keine CAN NG Rahmen 460 senden oder empfangen. Sendet beispielsweise die Teilnehmerstation 20 einen CAN NG Rahmen 460, den die CAN FD Teilnehmerstation 10 nicht verstehen kann, so werden zumindest bei der CAN NG Teilnehmerstation 20 als Sender und Empfänger, optional auch bei der CAN NG Teilnehmerstation 30 als reiner Empfänger, die Überlagerungserfassungseinheiten 230, 330 aktiv. Wenn beispielsweise die CAN FD Teilnehmerstation 10 nicht erfasst, insbesondere aufgrund eines Bitfehlers, dass nun ein CAN NG Rahmen 460 gesendet wird und einen Fehlerrahmen (Error-Flag) sendet, dann entsteht eine Überlagerung der zwei Physical Layer, welche von der aktiven Überlagerungserfassungseinheit 230, 330 erkannt, behoben und an den eigenen Knoten, genauer gesagt die Kommunikationssteuereinrichtung 21, 31, signalisiert wird. Dies umfasst auch, dass die Teilnehmerstation 10 oder die Teilnehmerstation 30 bei einem lokalen Bitfehler im res-Bit einen Fehlerrahmen 47 sendet, da die entsprechende Teilnehmerstation 10, 30 fälschlicherweise annimmt, dass es sich um einen CAN FD Rahmen (Nachricht 45) handelt und daher nach ein paar Bits einen Fehler, beispielsweise einen Stuffing-Fehler, in dem empfangenen und fälschlicherweise als CAN FD Rahmen 450 angesehenen Rahmen 460 feststellt. Demzufolge ermöglicht das von den Teilnehmerstationen 20, 30 durchgeführte Verfahren, dass in dem Bussystem 1 auch mindestens eine CAN FD Teilnehmerstation 10 vorhanden ist, die Nachrichten nach dem CAN FD Protokoll sendet und CAN NG Rahmen 460 nicht versteht. Zudem ermöglicht das von den Teilnehmerstationen 20, 30 durchgeführte Verfahren, dass in dem Bussystem 1 Nachrichten 45, 46 mit verschiedenen Kommunikationsformaten gesendet werden, nämlich bei dem vorliegenden Beispiel CAN FD oder CAN NG.

Bei dem neuen, alternativen Rahmenformat (Frame Format), nämlich der Rahmen 460 der CAN NG Nachricht 46, wird mittels res-Bits im Steuerfeld 463 vom CAN FD Rahmenformat (Frame Format) zum CAN NG Rahmenformat umgeschaltet. Hierbei sind die Rahmenformate von CAN FD und CAN NG bis zum res-Bit gleich. Somit unterstützen die Teilnehmerstationen 20, 30 jeweils auch CAN FD. Anschließend kann zu einem anderen Physical Layer umgeschaltet werden, der eine höhere Bitrate als in der vorangehenden Arbitrationsphase 467 ermöglicht. Somit wird mit einem ersten Physical Layer der erste Buszustand 401 für einen ersten digitalen Datenzustand der Nachrichten 46 erzeugt und ein zweiter Buszustand 402 für den zweiten digitalen Datenzustand der Nachrichten 46 derart erzeugt, dass der erste Buszustand 401 den zweiten Buszustand 402 überschreiben kann bzw. der dominante Buszustand den rezessiven Buszustand überschreiben kann. Gemäß einer Variante können mit dem zweiten Physical Layer unterschiedliche Buszustände 401, 402 derart erzeugt werden, dass die Buszustände 401, 402 für die unterschiedlichen digitalen Datenzustände der Nachrichten 46 einander nicht überschreiben können. Somit gibt es beim zweiten Physical Layer keine dominanten und rezessiven Buszustände.

Im CAN FD Protokoll ist das res-Bit bereits für neue Formate reserviert. Hierbei identifiziert res=0 das CAN FD Frame Format. Dagegen identifiziert res=1 das neue, alternative Rahmenformat 460, das von CAN NG verwendet wird. Erkennt eine Teilnehmerstation 10 ein res=1, so geht die Teilnehmerstation 10 in den Protokoll Ausnahmezustand (Protocol Exception State), der einem passiven Wartezustand entspricht. Dieser Wartezustand wird erst verlassen, wenn eine solche Teilnehmerstation 10 aufeinanderfolgende 11 rezessive Bits detektiert.

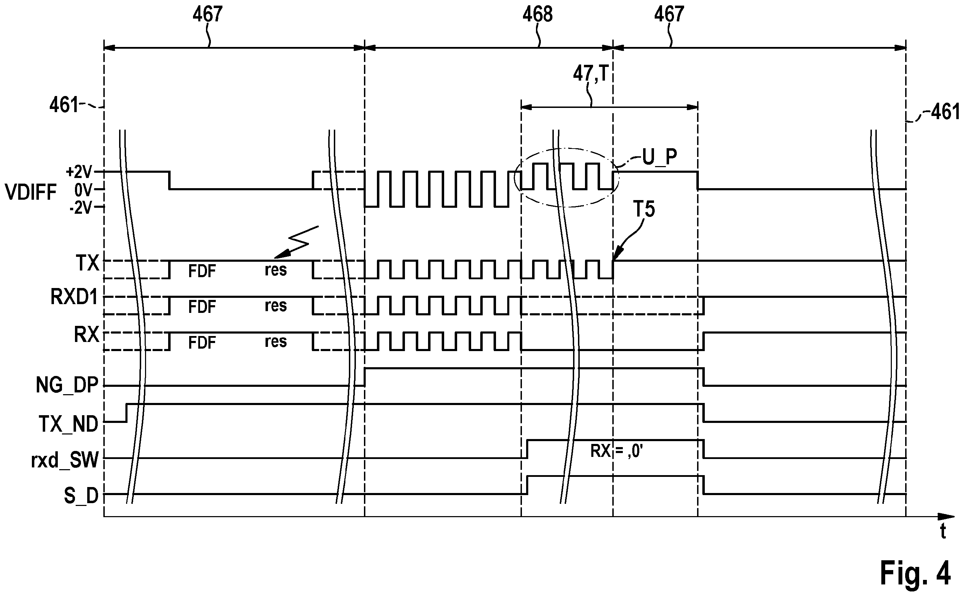

Bei einem Fehler des Sendesignals TX bzw. TX-Signals im res-Bit sendet die das TX-Signal sendende Teilnehmerstation 20, 30 bzw. die TX Teilnehmerstation einen Fehlerrahmen 47 (Error Flag), wie in Fig. 1 gezeigt, und schaltet nicht auf das alternative Format gemäß dem Rahmen 460 um. Die Behandlung einer möglichen Fehlerreaktion aufgrund eines Fehlers des Empfangssignals RX bzw. RX-Signals in einer empfangenden Teilnehmerstation 10, 20, 30 bzw. RX Teilnehmerstation erfolgt mit den Überlagerungserfassungseinheiten 230, 330. Dies wird nachfolgend anhand von Fig. 3 und Fig. 4 beschrieben.

Die Überlagerungserfassungseinheiten 230, 330 ermöglichen also, dass die Teilnehmerstationen 10, 20, 30 in dem Bussystem 1 koexistieren können, da eine Teilnehmerstation 10, 20, 30, welche die Umschaltung zu dem Format des CAN NG Rahmens 460 nicht erfasst hat, zwar einen Fehlerrahmen 47 sendet, welches zu einer Überlagerung der Physical Layer führt, die Überlagerung jedoch detektiert wird und abgestellt werden kann. Insbesondere kann ein Fehlerrahmen 47 während der DatenPhase des CAN NG Rahmens keinen "Kurzschluss" auslösen, wenn die Sende-/Empfangseinrichtung des Senders des CAN NG Rahmens 460, die Teil des TX Knotens bzw. der TX Teilnehmerstation ist, und die Sende-/Empfangseinrichtung, welche den Fehlerrahmen 47 sendet und Teil des RX Knotens bzw. einer RX Teilnehmerstation ist, gegeneinander treiben.

Ganz allgemein können in dem Bussystem 1 mit CAN NG im Vergleich zu CAN FD die folgenden abweichenden Eigenschaften realisiert werden:
a) Übernahme und ggf. Anpassung bewährter Eigenschaften, die für die Robustheit und Anwenderfreundlichkeit von CAN FD verantwortlich sind, insbesondere Rahmenstruktur mit Identifier und Arbitrierung nach dem CSMA/CR-Verfahren,
b) Beträchtliche Steigerung der Netto-Datenübertragungsrate,
c) CAN NG verwendet in der Datenphase 468, ein anderes Physical Layer als CAN FD, z.B. ein Physical Layer, bei dem beide Bus-Zustände aktiv getrieben werden und Fehlerrahmen (Error Flags) während der Datenphase 468 nicht vorgesehen sind. Mit so einem Physical Layer für CAN NG lassen sich deutlich höhere Bitraten erreichen als bei CAN FD.

Fig. 3 zeigt als Beispiel den Aufbau der Überlagerungserfassungseinheit 230 in der Sende-/ Empfangseinrichtung 22. Die Überlagerungserfassungseinheit 330 ist auf dieselbe Weise ausgeführt, so dass die nachfolgende Beschreibung auch für die Überlagerungserfassungseinheit 330 gültig ist.

Die Sende-/ Empfangseinrichtung 22 hat die Sende- / Empfangseinheit 220, die zum Bereitstellen des passenden Physical Layers für die verschiedenen Phasen von CAN FD Nachrichten 45 und von CAN NG Nachrichten 46, für den Bus 40 ausgestaltet ist. Zudem ist die Sende- / Empfangseinheit 220 zum Empfangen von CAN FD Nachrichten 45 und zum Empfangen von CAN NG Nachrichten 46 von dem Bus 40 ausgestaltet. Die Sende- / Empfangseinheit 220 kann jeweils zwischen dem Senden und/oder Empfangen von CAN FD Nachrichten 45 und dem Senden und/oder Empfangen von CAN NG Nachrichten 46 umschalten. Die Sende- / Empfangseinheit 220 ist an die Busadern 41, 42 zum Empfang der Signale CAN_H und CAN_L angeschlossen und mit der Überlagerungserfassungseinheit 230 verschaltet.

An der Überlagerungserfassungseinheit 230 wird das digitale TX-Signal, das auch als Sendesignal TXD bezeichnet wird, von der Kommunikationssteuereinrichtung 21 empfangen und an die Sende- / Empfangseinheit 220 ausgegeben. Unter Berücksichtigung eines Eingangs-Signals S_D codiert die Sende- / Empfangseinheit 220 das TX-Signal auf dem jeweils verwendeten Physical Layer für die unterschiedlichen Kommunikationsphasen, nämlich Arbitrationsphase 467 oder Datenphase 468, der Nachrichten 45, 46. Gleichzeitig decodiert die Sende-/ Empfangseinheit 220 den Zustand auf dem Bus 40, also die Signale CAN_H, CAN_L auf den Busadern 41, 42, und gibt das Ergebnis als digitales RXD1-Signal an die Überlagerungserfassungseinheit 230 weiter. Wie nachfolgend beschrieben, erzeugt die Überlagerungserfassungseinheit 230 aus dem RXD1-Signal das digitale RX-Signal, das auch als Empfangssignal RXD bezeichnet wird.

Ist der CAN NG Physical Layer derart geartet, dass in der Datenphase 468 des CAN NG Rahmens 460 beide Buszustände 401, 402 getrieben werden, dann entnimmt die Sende- / Empfangseinheit 220 daraus, dass der Bus 40, während das Signal S_D gesetzt ist (S_D='1'), nicht getrieben werden darf und beispielsweise hochohmig sein muss.

Die Überlagerungserfassungseinheit 230 hat einen Datenphase-Erfassungsblock 231, einen Sender-Erfassungsblock 232, einen Kollisionserfassungsblock 233 und einen Empfangssignal-Auswahlblock 234. Da der Datenphase-Erfassungsblock 231 und der Sender-Erfassungsblock 232 optional sind, sind diese dargestellt.

Der optionale Datenphase-Erfassungsblock 231 erfasst oder detektiert die Datenphase 468 des CAN NG Rahmens 460. Ob sich eine Rahmenübertragung in der Datenphase 468 eines CAN NG Rahmens 460 befindet, signalisiert der Datenphase-Erfassungsblock 231 dem Kollisionserfassungsblock 233 mit Hilfe des digitalen Signals NG_DP. Hierbei gilt beispielsweise NG_DP:=1, wenn sich eine Übertragung eines CAN NG Rahmens 460 derzeit in der Datenphase 468 befindet, sonst gilt NG_DP:=0.

Der Datenphase-Erfassungsblock 231 verwendet hierzu das Signal RXD1. Hierfür hat der Datenphase-Erfassungsblock 231 eine sehr vereinfachte CAN NG Kommunikationssteuereinrichtung 2311. Die CAN NG Kommunikationssteuereinrichtung 2311 beobachtet das Signal RXD1 von der Sende-/ Empfangseinheit 220 und kann damit exakt vorhersagen, wann die Datenphase 468 beginnt und wann die Datenphase 468 aufhört. Das Ende der Datenphase 468 hängt von der Zahl der übertragenen Bytes ab. Die Zahl der Nutzdatenbytes in dem Datenfeld 464 ist am Anfang der Datenphase 468 in dem Datenlängefeld codiert. Durch Zählen von Bits kann der Datenphase-Erfassungsblock 231 also das Ende der Datenphase 468 bestimmen.

Zusätzlich verwendet der Datenphase-Erfassungsblock 231 die Signale CAN_H und CAN_L, um zu entscheiden, ob derzeit die Datenphase 468 stattfindet. Da CAN NG einen anderen Physical Layer für die Datenphase 468 als für die Arbitrationsphase 467 verwendet, werden in der Datenphase 468 eines CAN NG Rahmens 460 andere Differenzspannungen VDIFF zwischen CAN_H und CAN_L auftreten als bei der Datenphase 468 einer CAN FD Nachricht 45. Der Datenphase-Erfassungsblock 231 erkennt also anhand der Differenzspannung des verwendeten Physical Layers, ob sich die Übertragung eines CAN NG Rahmens 460 in der Datenphase 468 befindet.

Durch Kombination der beiden Erfassungsergebnisse aus dem Signal RXD1 und den Bussignalen CAN_H, CAN_L ist es möglich, dass der Datenphase-Erfassungsblock 231 immer eine Mehrheitsentscheidung bzw. UND-Entscheidung trifft, das heißt, erst wenn beide Erfassungsergebnisse ergeben, dass derzeit die Datenphase 468 vorliegt, setzt der Datenphase-Erfassungsblock 231 das Signal NG_DP = 1.

Am konservativsten und damit am sichersten ist jedoch die alternative Möglichkeit, dass sobald eines der Erfassungsergebnisse aus dem Signal RXD1 und den Bussignalen CAN_H, CAN_L sagt, dass die Datenphase 468 vorliegt, der Datenphase-Erfassungsblock 231 dies als wahr annimmt.

Die Kombination der beiden Erfassungsergebnisse aus dem Signal RXD1 und den Bussignalen CAN_H, CAN_L ist als Variante zur Erfassung der Datenphase 468 sehr robust gegenüber Störungen am Bus 40. Eine derartige Störung könnte sein, dass ein Bit-Fehler im RXD1 Datenstrom aufgrund von Einstrahlung die Kommunikationssteuereinrichtung 2311 in dem Datenphase-Erfassungsblock 231 glauben lässt, dass der Rahmen 460 kürzer ist als in Wirklichkeit, oder das eine CAN FD Nachricht 45 übertragen wird.

Optional wird das Signal NG_DP an die Kommunikationssteuereinrichtung 21 weitergeleitet. Aus dem Signal NG_DP kann die Kommunikationssteuereinrichtung 21, falls die Kommunikationssteuereinrichtung 21 nur Empfänger des Rahmens 460 ist, ableiten, warum der Bus 40 so lange blockiert ist, nämlich durch einen CAN NG Rahmen 460.

Der optionale Sender-Erfassungsblock 232 erfasst oder detektiert, ob die Teilnehmerstation 20 derzeit der Sender der Nachricht 45, 46 ist oder nicht. Als Ergebnis signalisiert der Sender-Erfassungsblock 232 dem Kollisionserfassungsblock 233 mit Hilfe eines Signals TX_ND, ob die Teilnehmerstation 20 derzeit sendet oder nicht. Beispielsweise gilt TX_ND:=1, wenn die Teilnehmerstation 20 derzeit sendet. Ansonsten gilt TX_ND:=0.

Hierbei beobachtet der Sender-Erfassungsblock 232 das Signal TX, welches die Kommunikationssteuereinheit 21 bereitstellt, und zählt beispielsweise die Anzahl der Flankenwechsel des Signals TX in einer vorbestimmten Zeitdauer T. Sind in der vorbestimmten Zeitdauer T mehr als 0 Flankenwechsel aufgetreten, entscheidet der Sender-Erfassungsblock 232, dass die Teilnehmerstation 20, also die eigene Teilnehmerstation, derzeit sendet. Um diese Information zu plausibilisieren, kann der Sender-Erfassungsblock 232 optional die Anzahl der Flankenwechsel am Signal RXD1 in der vorbestimmten Zeitdauer T zählen. Ist die Zahl der Flankenwechsel in den Signalen TX, RXD1 ähnlich und hat mindestens einen Wert > 0, entscheidet der Sender-Erfassungsblock 232, dass die Teilnehmerstation 20 derzeit sendet.

Alternativ kann der Sender-Erfassungsblock 232 als Zähler ausgestaltet sein, um die Erfassung bzw. Detektion durchzuführen. Insbesondere kann ein Zähler verwendet werden, welcher durch eine Flanke am Sendesignal TX inkrementiert wird und durch eine Flanke an dem Empfangssignal RX dekrementiert wird. Ist der Wert des Zählers deutlich negativ, entscheidet der Sender-Erfassungsblock 232, dass die Teilnehmerstation 20 derzeit nicht sendet. Deutlich negativ bedeutet, dass der Sender-Erfassungsblock 232 einen vorbestimmten Schwellenwert als Referenz nimmt, um die genannte Entscheidung zu treffen. Andernfalls entscheidet der Sender-Erfassungsblock 232, dass die Teilnehmerstation 20 derzeit sendet. Zwischen zwei Nachrichten 45, 46 setzt der Sender-Erfassungsblock 232 den Zähler zurück.

Der Kollisionserfassungsblock 233 erfasst, ob während der Datenphase 468 eines CAN NG Rahmens 460 der Bus 40 zusätzlich von einer Teilnehmerstation im CAN FD Modus getrieben wird, da diese Teilnehmerstation nämlich einen Fehlerrahmen 47 (Error-Flag) sendet, wie zuvor beschrieben. Ist dies der Fall, reagiert der Kollisionserfassungsblock 233 darauf, da während der Datenphase 468 eines CAN NG Rahmens 46 der Physical Layer nur von einer einzigen CAN NG Sende-/Empfangseinrichtung getrieben werden darf, nämlich dem Sender des Rahmens 460. Andernfalls, also wenn während der Datenphase 468 eines CAN NG Rahmens 460 eine der empfangenden Teilnehmerstationen 10, 20, 30 im CAN FD Modus einen Fehlerrahmen 47 (Error-Flag) sendet, dann überlagern sich die zwei Physical Layer. Als Folge davon haben die Bits des Rahmens 460 nun andere Pegel für mindestens einen der Buszustände 401, 402, so dass die Differenzspannung VDIFF zwischen CAN_H und CAN_L anders ist, als sie in der CAN NG Datenphase 468 sein sollten. Dies ist in dem elliptisch umrahmten Bereich U_P der Differenzspannung VDIFF von Fig. 4 veranschaulicht. Die Pegel unterscheiden sich höchstwahrscheinlich auch von den Pegeln bei CAN FD.

Dem Kollisionserfassungsblock 233 von Fig. 3 ist bekannt, in welchem Wertebereich die Pegel bei einer Überlagerung der Physical Layer sind. Daher kann der Kollisionserfassungsblock 233 einen Vergleich der Pegel auf dem Bus 40 mit dem Wertebereich der Pegel bei einer Überlagerung durchführen. Zusätzlich oder alternativ kann der Kollisionserfassungsblock 233 einen Vergleich der Pegel auf dem Bus 40 mit dem Wertebereich der Pegel im Normalbetrieb durchführen, also wenn keine Überlagerung der Physical Layer auftritt, wie in den übrigen Bereichen der Differenzspannung VDIFF von Fig. 4 veranschaulicht.

Alternativ, je nach Ausgestaltung des CAN NG Physical Layers für die Datenphase 468, kann der Kollisionserfassungsblock 233 eine Überlagerung der Physical Layer derart detektieren, dass der Kollisionserfassungsblock 233 erkennt, dass der Pegel für den einen Buszustand 401, 402 nicht mehr auftaucht, während der CAN FD Knoten seinen Fehlerrahmen 47 (Error-Flag) sendet. Das heißt explizit, der Kollisionserfassungsblock 233 beobachtet, ob während einer Zeit x beide Buspegel, nämlich für die Bits 0 und 1, also die Buszustände 401 und 402, auf dem Bus 40 zu sehen sind. Sieht der Kollisionserfassungsblock 233 nur die Pegel für das eine Bit, nämlich für das Bit 0 oder das Bit 1, dann ist die Überlagerung des Physical Layers für CAN FD auf dem Physical Layer für CAN NG erfasst bzw. detektiert.

Für die Erfassung des Fehlerrahmens 47 oder einer sonstigen Überlagerung von Physical Layern überwacht der Kollisionserfassungsblock 233 ständig die Pegel der einzelnen Bits und erkennt damit, ob während der CAN NG Datenphase 460 eine Teilnehmerstation 10, 30 im CAN FD Modus einen Fehlerrahmen 47 sendet, wie in Fig. 4 in dem Bereich U_P der Differenzspannung VDIFF gezeigt.

Erfasst der Kollisionserfassungsblock 233 mindestens einen Buspegel, der auf eine Überlagerung der Physical Layer hindeutet, so kann der Kollisionserfassungsblock 233 von Fig. 3 optional weitere Informationen für eine Plausibilisierung hinzuziehen. Hierfür ist optional mindestens eine der folgenden Möglichkeiten für die Plausibilisierung anwendbar. Insbesondere ist es dabei denkbar, die Ergebnisse einzelner Plausibilisierungsprüfungen gewichtet zu kombinieren, um zu einer möglichst robusten Entscheidung in Bezug auf die Überlagerung der Buspegel zu kommen.

Gemäß einer ersten Möglichkeit für die Plausibilisierung berücksichtigt der Kollisionserfassungsblock 233, dass die Bits eines CAN FD Fehlerrahmens 47 im Vergleich zu den Bits in der Datenphase 468 des CAN NG Rahmens 460 sehr lang sind. Der Kollisionserfassungsblock 233 kann - anstatt sofort zu reagierten - noch für eine zusätzliche Beobachtungszeit T den oder die Buspegel bzw. die Buszustände 401, 402 weiter beobachten, um zu sehen, ob weiterhin Buspegel vorkommen, die auf eine Überlagerung hindeuten. Für die Wahl der zusätzlichen Beobachtungszeit T kann im Kollisionserfassungsblock 233 das Wissen genutzt werden, dass ein CAN Fehlerrahmen 47 eine Länge von 6 Bits hat, eine Folge von Fehlerrahmen 47 eine Länge von 12 Bits hat und die Bitrate des Fehlerrahmen 47 maximal 1 Mbit/s beträgt. Beispielsweise könnte T = 6*1000 ns gewählt werden, was der Mindestlänge eines CAN Fehlerrahmens 47 entspricht, wie in Fig. 4 gezeigt.

Gemäß einer zweiten Möglichkeit für die Plausibilisierung berücksichtigt der Kollisionserfassungsblock 233 von Fig. 3 das Signal NG_DP, das der Datenphase-Erfassungsblock 231 erzeugt und an den Kollisionserfassungsblock 233 ausgibt. Anhand des Eingangssignals NG_DP weiß der Kollisionserfassungsblock 233, dass sich eine Übertragung auf dem Bus 40 in der Datenphase 468 eines Rahmens 460 befindet. Da nur während der Datenphase 468 eines Rahmens 460 eine Überlagerung von Buspegeln vorkommen kann, kann der Kollisionserfassungsblock 233 dieses Wissen nutzen. Beispielsweise kann das Signal NG_DP verwendet werden, um den Kollisionserfassungsblock 233 zu aktivieren. In diesem Fall wäre der Kollisionserfassungsblock 233 bei NG_DP ='1' aktiv und würde die Buspegel beobachten. In allen anderen Fällen wäre der Kollisionserfassungsblock 233 deaktiviert.

Alternativ zu der zweiten Möglichkeit für die Plausibilisierung kann der Kollisionserfassungsblock 233 die Buspegel bzw. die Buszustände 401, 402 ständig beobachten und falls beispielsweise eine Überlagerung bereits für eine längere Zeit beobachtet wurde, kann trotzdem reagiert werden, auch wenn NG_DP ='0' ist.

Für alle zuvor genannten Möglichkeiten generiert der Kollisionserfassungsblock 233 das Signal S_D. Der Kollisionserfassungsblock 233 gibt das Signal S_D an die Sende-/ Empfangseinheit 220 aus. Wurde eine Überlagerung erfasst bzw. detektiert und optional plausibilisiert, wie zuvor beschrieben, so setzt der Kollisionserfassungsblock 233 das Signal S_D = '1'. Andernfalls ist das Signal S_D = '0'. Das Signal S_D bleibt so lange auf dem Wert ,1', bis beispielsweise eine gewisse Zeit verstrichen ist, oder beispielsweise bis wieder für das Signal NG_DP = ,0' gilt.

Für das vorliegende Beispiel des CAN Bussystems 1 wird angenommen, dass während der CAN NG Datenphase 468 nur eine Teilnehmerstation senden darf, nämlich der TX Knoten, also bei dem vorliegenden Beispiel die Teilnehmerstation 20 oder die Teilnehmerstation 30. Somit ist das Signal S_D eigentlich nur dann zu setzen, wenn es sich bei dieser Teilnehmerstation um den Sendeknoten des CAN NG Rahmens 460 handelt. Daher gibt es die Option, dass die Überlagerungserfassungseinheit 230 das Signal S_D nur dann als S_D ='1' setzt, wenn die Teilnehmerstation 20 der Sender der Nachricht 46 ist, die Teilnehmerstation 20 also die TX-Teilnehmerstation ist. Das Signal TX_ND zeigt an, ob die Teilnehmerstation 20 derzeit eine TX-Teilnehmerstation ist. Insbesondere kann im einfachsten Fall dazu das Signal S_D mit den Signal TX_ND über UND-verknüpft werden.

Um die Teilnehmerstationen 20, 30, genauer gesagt deren Kommunikationssteuereinrichtungen 21, 31, über den Vorfall der Überlagerung auf dem Physical Layer zu informieren, erzeugt der Kollisionserfassungsblock 233 mindestens ein Signal, nämlich ein Signal rxd_SW und optional ein Signal C_L.

Der Empfangssignal-Auswahlblock 234 kann insbesondere als Multiplexer ausgestaltet sein. Mit Hilfe des Signals rxd_SW und des Empfangssignal-Auswahlblocks 234 wird das Signal RX für die eigenen Kommunikationssteuereinrichtung 21 auf einen festen Wert gesetzt, z.B. ,0', wie in Fig. 3 gezeigt. Alternativ kann das Signal RX auf den festen Wert ,1' gesetzt werden. Weil eine lange Phase mit nur einem Wert, wie beispielsweise dem Wert ,0', in der CAN NG Datenphase 468 nicht vorkommen kann, erkennt die CAN NG Teilnehmerstation 20, genauer gesagt ihre Kommunikationssteuereinrichtung 21, als sendende und empfangende Teilnehmerstation, dass es zu einer Überlagerung auf dem Physical-Layer des Rahmens 460 kam. Die sendende und empfangende Teilnehmerstation kann nun auf diese Information reagieren. Insbesondere kann die CAN NG Sende-/Empfangseinheit 220 der Sende-/Empfangseinrichtung 22 und/oder die Kommunikationssteuereinrichtung 21 der bisher sendenden Teilnehmerstation 20 das Senden einstellen und von der Datenphase 468 in die Arbitrationsphase 467 schalten. Insbesondere kann die CAN NG Teilnehmerstation 20 das Empfangen einstellen und ebenfalls von der Datenphase 468 in die Arbitrationsphase 467 schalten. Anschließend können alle Teilnehmerstation 10, 20, 30 am Bus 40, also auch die Teilnehmerstation 10 (auch CAN FD) auf eine lange rezessive Phase (entsprechend ISO11898-1:2015) warten, bevor ein oder mehrere Teilnehmerstationen 10, 20, 30 mit dem Senden eines Rahmens 450, 460 starten.

Mit Hilfe des optionalen Signals C_L signalisiert der Kollisionserfassungsblock 233 und damit die Überlagerungserfassungseinheit 230 der eigenen Kommunikationssteuereinrichtung 21, dass sich eine unerwünschte Überlagerung auf dem Physical Layer ergeben hat. Mit diesem Wissen könnte die Kommunikationssteuereinrichtung 21 beispielsweise selbst die Sende-/Empfangseinheit 220 anweisen, das Senden einzustellen.

Fig. 4 zeigt ein Beispiel der zuvor genannten Signale über der Zeit t für den Fall, dass die Teilnehmerstation 20 eine Nachricht 46 auf den Bus 40 sendet, also als TX-Teilnehmerstation agiert. Hierbei erwartet eine Teilnehmerstation des Bussystems 1, beispielsweise die Teilnehmerstation 30 als Empfänger der Nachricht 46, also als eine RX-Teilnehmerstation, fälschlicherweise aufgrund des mit dem gezackten schwarzen Blockpfeil dargestellten Fehlers eine CAN FD Nachricht 45, obwohl die CAN NG Nachricht 46 gesendet wird. Die Teilnehmerstation 30 wird bei einem solchen Fall in der Datenphase 468 einen Fehler detektieren und den CAN Fehlerrahmen (Error-Flag) 47 auf den Bus 40 senden. Die RX-Teilnehmerstationen senden den Fehlerrahmen 47 in dem Zeitraum wie in Fig. 4 gekennzeichnet. Daher kommt es zu einer Überlagerung der Physical Layer der CAN NG Datenphase 468 und des Physical Layers des Fehlerrahmens 47, wie in Fig. 4 an dem Signal VDIFF = CAN_H - CAN_L auf dem Bus 40 mit U_P gekennzeichnet. Im Beispiel wurde angenommen, dass in der CAN NG Datenphase 468 eine logische 1 ein VDIFF = +2V hat und eine logische 0 ein VDIFF = -2V hat. Selbstverständlich sind jedoch andere Werte für VDIFF möglich. Ein Fehlerrahmen (Error-Flag) 47 entspricht 6 dominanten Bits und wird entsprechend mit einer Differenzspannung von VDIFF=+2V getrieben. Das führt zu der mit U_P gekennzeichneten Überlagerung.

In Fig. 4 ist ein beliebiger Wert eines Signals mit gestrichelten Linien dargestellt. Die Laufzeiten der Signale sind in Fig. 4 als 0 angenommen, damit das Signal-Zeit Diagramm von Fig. 4 einfacher zu verstehen ist.

An dem Signal RX von Fig. 4 und dem Signal S_D von Fig. 4 ist erkennbar, dass die Überlagerung der Physical Layer detektiert wurde. Am Signal rxd_SW und RX ist erkennbar, dass die Überlagerungserfassungseinheit 230 der eigenen Teilnehmerstation, also hier der Kommunikationssteuereinheit 21, die Überlagerung mitteilt. Außerdem ist an dem Signal TX erkennbar, dass die Teilnehmerstation 20 ab einem Zeitpunkt T5 aufhört, die Nachricht 46 zu senden, da die Teilnehmerstation 20 eine Phase detektiert hat, in welcher das Signal RX lange den Wert ,0' hatte.

Gemäß einem zweiten Ausführungsbeispiel führt der Datenphase-Erfassungsblock 231 seine Erfassung nur mit den Bussignalen CAN_H, CAN_L aus. Ansonsten ist die Funktion der Überlagerungserfassungseinheit 230 wie bei dem vorangehenden Ausführungsbeispiel ausgeführt.

Die Variante des Datenphase-Erfassungsblocks 231 gemäß dem vorliegenden Ausführungsbeispiel ist somit weniger aufwändig als die Variante des Datenphase-Erfassungsblocks 231 gemäß dem vorangehenden Ausführungsbeispiel. Jedoch kann bei dem vorliegenden Ausführungsbeispiel eine Störung nicht ausfindig gemacht werden, die nur mit der Erfassung und Auswertung des Signals TX erkannt werden kann.

Gemäß einem dritten Ausführungsbeispiel führt der Datenphase-Erfassungsblock 231 seine Erfassung nur mit dem Signal TX aus. Ansonsten ist die Funktion der Überlagerungserfassungseinheit 230 wie bei dem ersten Ausführungsbeispiel ausgeführt.

Die Variante des Datenphase-Erfassungsblocks 231 gemäß dem vorliegenden Ausführungsbeispiel ist somit weniger aufwändig als die Variante des Datenphase-Erfassungsblocks 231 gemäß dem ersten Ausführungsbeispiel. Jedoch kann bei dem vorliegenden Ausführungsbeispiel eine Störung nicht ausfindig gemacht werden, die nur mit der Erfassung und Auswertung der Bussignale CAN_H, CAN_L erkannt werden kann.

Gemäß einem vierten Ausführungsbeispiel ist der Sender-Erfassungsblock 232 als eine vereinfachte CAN NG Kommunikationssteuereinrichtung ausgeführt, die als Eingangssignal das Signal TX verwendet. Durch die sequentielle Dekodierung des gesendeten CAN NG Rahmens 460 kann die vereinfachte CAN NG Kommunikationssteuereinrichtung sehr leicht und sicher entscheiden, ob die Teilnehmerstation 20, also die eigene Teilnehmerstation, ein Sender ist oder nicht. Bleibt das Signal TX beispielsweise ab einem bestimmten Bit während der Arbitrationsphase 467 auf dem Wert 1, dann entnimmt die vereinfachte CAN NG Kommunikationssteuereinrichtung daraus, dass die Teilnehmerstation 20, also die eigene Teilnehmerstation, die Arbitration verloren hat, also nicht der Sender ist.

Diese Ausgestaltung des Sender-Erfassungsblocks 232 zur Erfassung, ob die Teilnehmerstation 20 der Sender ist, ist robuster bzw. zuverlässiger als die Ausgestaltung des Sender-Erfassungsblocks 232 gemäß dem ersten Ausführungsbeispiel. Jedoch hat die vorliegende Ausgestaltung des Sender-Erfassungsblocks 232 einen höheren Ressourcenbedarf als die Ausgestaltung des Sender-Erfassungsblocks 232 gemäß dem ersten Ausführungsbeispiel.

Alle zuvor beschriebenen Ausgestaltungen der Kommunikationssteuereinrichtungen 21, 31, der Sende- / Empfangseinrichtungen 22, 32, der Überlagerungserfassungseinheiten 230, 330, der Teilnehmerstationen 10, 20, 30, des Bussystems 1 und der darin ausgeführten Verfahren können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Das zuvor beschriebene Bussystem 1 gemäß den Ausführungsbeispielen ist anhand eines auf dem CAN-Protokoll basierenden Bussystems beschrieben. Das Bussystem 1 gemäß den Ausführungsbeispielen kann jedoch auch eine andere Art von Kommunikationsnetz sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 10 in dem Bussystem 1 entfallen. In diesem Fall sind die Überlagerungserfassungseinheiten 230, 330 erforderlich, wenn die Teilnehmerstationen 20, 30 auch in dem CAN FD Format senden können, damit die Überlagerungen während der Datenphase 468 des CAN NG Rahmens 460 erkannt und behandelt wird, wenn eine der Teilnehmerstationen 20, 30 nicht erfolgreich zu dem Format der Datenphase 468 des CAN NG Rahmens 460 umgeschaltet hat. Es ist möglich, dass eine oder mehrere der Teilnehmerstationen 20 oder 30 in dem Bussystem 1 vorhanden sind.

Möglicherweise ist mindestens eine der Überlagerungserfassungseinheiten 230, 330 extern von der zugehörigen Sende- / Empfangseinrichtung 22, 32 angeordnet. Insbesondere ist mindestens eine der Überlagerungserfassungseinheit 230, 330 als separate Einheit der Teilnehmerstation 20, 30 vorgesehen.

## Patentansprüche

1. Überlagerungserfassungseinheit (230; 330) für eine Teilnehmerstation (20; 30) eines seriellen Bussystems (1), mit
einem Kollisionserfassungsblock (233) zur Erfassung von Buszuständen (401, 402) auf einem Bus (40) des Bussystems (1), bei welchem Buszustände (401, 402) von Teilnehmerstationen (20, 30) des Bussystems (1) zum Senden einer Nachricht (45; 46) in einer ersten Kommunikationsphase (467) auf dem Bus (40) mit einem ersten Physical Layer erzeugt werden und in einer zweiten Kommunikationsphase (468) mit einem zweiten Physical Layer erzeugt werden können, der sich von dem ersten Physical Layer unterscheidet,
wobei der Kollisionserfassungsblock (233) zur Erzeugung eines Signals (S_D; rxd_SW) ausgestaltet ist, dessen Wert angibt, ob die Buszustände (401, 402) in der zweiten Kommunikationsphase (468) einen Pegel haben, der einer Überlagerung des ersten und zweiten Physical Layers oder einer Überlagerung von zwei zweiten Physical Layern entspricht oder nicht, und
wobei der Kollisionserfassungsblock (233) zur Ausgabe des Signals (S_D; rxd_SW) für die Teilnehmerstation (20; 30) ausgestaltet ist.

2. Überlagerungserfassungseinheit (230; 330) nach Anspruch 1,
wobei der Kollisionserfassungsblock (233) ausgestaltet ist zu erfassen, ob Bits für einen Rahmen (460) der Nachricht (46) andere Pegel haben als die Pegel in der zweiten Kommunikationsphase (468) üblicherweise haben, und/oder
wobei der Kollisionserfassungsblock (233) ausgestaltet ist zu erfassen, ob in der zweiten Kommunikationsphase (468) für ein digitales Signal für einen Rahmen (460) der Nachricht (46) zwei verschiedene Buszustände (401, 402) auf dem Bus (40) vorkommen oder nicht.

3. Überlagerungserfassungseinheit (230; 330) nach Anspruch 1 oder 2, wobei der Kollisionserfassungsblock (233) ausgestaltet ist, eine Plausibilisierung einer erfassten Überlagerung durchzuführen, um zu entscheiden, ob der Wert des Signals (S_D, rxd_SW) auf einen Wert zu setzen ist, der die Überlagerung anzeigt.

4. Überlagerungserfassungseinheit (230; 330) nach Anspruch 3, wobei der Kollisionserfassungsblock (233) ausgestaltet ist, die Plausibilisierung mit Hilfe von mindestens zwei verschiedenen Varianten durchzuführen, die unterschiedlich gewichtet werden, um zu entscheiden, ob die Überlagerung auftritt oder nicht.

5. Überlagerungserfassungseinheit (230; 330) nach einem der vorangehenden Ansprüche, zudem mit einem Empfangssignal-Auswahlblock (234) zur Auswahl eines Empfangssignals (RX) auf der Grundlage des von dem Kollisionserfassungsblock (233) erzeugten Signals (rxd_SW) und zur Ausgabe des ausgewählten Empfangssignals (RX) an eine Kommunikationssteuereinrichtung (21; 31) der Teilnehmerstation (20; 30).

6. Überlagerungserfassungseinheit (230; 330) nach einem der vorangehenden Ansprüche, zudem mit
einem Datenphase-Erfassungsblock (231) zur Erfassung der Datenphase (468) der auf dem Bus (40) seriell übertragenen Nachricht (46), und/oder
einem Sender-Erfassungsblock (232) zur Erfassung, ob die Teilnehmerstation (20; 30) derzeit der Sender der Nachricht (46) ist oder nicht,
wobei der Kollisionserfassungsblock (233) ausgestaltet ist, das Signal (S_D) als Reaktion auf mindestens ein Erfassungsergebnis zu erzeugen, das der Kollisionserfassungsblock (233) von dem Datenphase -Erfassungsblock (231) und/oder dem Sender-Erfassungsblock (232) empfangen hat.

7. Überlagerungserfassungseinheit (230; 330) nach Anspruch 6,
wobei der Datenphase -Erfassungsblock (231) ausgestaltet ist, zur Erfassung der Datenphase (468) einen Zustand auf dem Bus (40) zu erfassen, und/oder
wobei der Datenphase -Erfassungsblock (231) ausgestaltet ist, zur Erfassung der Datenphase (468) ein digitales Empfangssignal (RXD1) auszuwerten, das aus der vom Bus (40) empfangenen Nachricht (46) erzeugt wird.

8. Überlagerungserfassungseinheit (230; 330) nach Anspruch 6 oder 7, wobei der Sender-Erfassungsblock (232) ausgestaltet ist, ein Sendesignal (TX) auszuwerten, das von der Teilnehmerstation (20; 30) zu dem Bus (40) gesendet wird.

9. Überlagerungserfassungseinheit (230; 330) nach Anspruch 8,
wobei der Sender-Erfassungsblock (232) ausgestaltet ist, zur Auswertung des Sendesignals (TX) Flankenwechsel des Sendesignals (TX) zu zählen, und/oder
wobei der Sender-Erfassungsblock (232) ausgestaltet ist, zur Auswertung des Sendesignals (TX) eine sequentielle Dekodierung des Sendesignals (TX) auszuführen, und/oder
wobei der Sender-Erfassungsblock (232) ausgestaltet ist, zur Auswertung des Sendesignals (TX) das Sendesignal (TX) mit einem digitalen Empfangssignal (RXD1) zu vergleichen, das aus der vom Bus (40) empfangenen Nachricht (46) erzeugt wird.

10. Überlagerungserfassungseinheit (230; 330) nach einem der vorangehenden Ansprüche,
wobei in der ersten Kommunikationsphase zur Übertragung der Nachricht (45; 46) auf den Bus (40) zwischen den Teilnehmerstationen (10, 20, 30) des Bussystems (1) ausgehandelt wird, welche der Teilnehmerstationen (10, 20, 30) in der nachfolgenden zweiten Kommunikationsphase zumindest zeitweise einen exklusiven, kollisionsfreien Zugriff auf den Bus (40) des Bussystems (1) hat,
wobei die zweite Kommunikationsphase eine Datenphase (468) ist, in welcher Nutzdaten der Nachricht (45; 46) auf dem Bus (40) übertragen werden.

11. Teilnehmerstation (20; 30) für ein serielles Bussystem (1), mit
einer Kommunikationssteuereinrichtung (21; 31) zum Senden einer Nachricht (45; 46) zu einem Bus (40) des Bussystems (1) und/oder zum Empfangen einer Nachricht (45; 46) von dem Bus (40) des Bussystems (1),
einer Sende- / Empfangseinrichtung (22; 32) zum Senden der Nachricht (45; 46) auf den Bus (40) und/oder Empfangen der Nachricht (45; 46) von dem Bus (40), und
einer Überlagerungserfassungseinheit (230; 330) nach einem der vorangehenden Ansprüche, die mit der Kommunikationssteuereinrichtung (11; 21; 31) und der Sende-Empfangseinrichtung (12; 22; 32) verschaltet ist,
wobei die Sende- / Empfangseinrichtung (22; 32) ausgestaltet ist, beim Senden mit einer ersten Bitrate einen ersten Buszustand (401) für einen ersten digitalen Datenzustand der Nachrichten (45; 46) zu erzeugen und einen zweiten Buszustand (402) für den zweiten digitalen Datenzustand der Nachrichten (45; 46) derart zu erzeugen, dass der zweite Buszustand (402) den ersten Buszustand (401) überschreiben kann,und
wobei die Sende- / Empfangseinrichtung (22; 32) ausgestaltet ist, beim Senden mit einer zweiten Bitrate, die höher ist als die erste Bitrate, unterschiedliche Buszustände (401, 402) derart zu erzeugen, dass die Buszustände (401, 402) für die unterschiedlichen digitalen Datenzustände der Nachrichten (45; 46) einander nicht überschreiben können.

12. Teilnehmerstation (20; 30) nach Anspruch 11, wobei die Sende-/ Empfangseinrichtung (22; 32) ausgestaltet ist, beim Senden mit der zweiten Bitrate unterschiedliche Buszustände (401, 402) derart zu erzeugen, dass die Buszustände (401, 402) für die unterschiedlichen digitalen Datenzustände der Nachrichten (45; 46) einander nicht überschreiben können, oder beim Senden mit der zweiten Bitrate die unterschiedlichen Buszustände (401, 402) zu erzeugen wie beim Senden mit der ersten Bitrate.

13. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (20; 30) eine Teilnehmerstation (20; 30) nach Anspruch 11 oder 12 ist.

14. Bussystem (1) nach Anspruch 13,
zudem mit mindestens einer zusätzlichen Teilnehmerstation (10), welche zur Übertragung der Nachricht (45) auf dem Bus (40) nur ausgestaltet ist, in einer ersten und zweiten Kommunikationsphase der Nachricht (45) Buszustände (401, 402) derart auf dem Bus (40) zu erzeugen, dass der zweite Buszustand (402) den ersten Buszustand (401) überschreiben kann,
wobei die mindestens eine zusätzliche Teilnehmerstation (10) über den Bus (40) mit den mindestens zwei Teilnehmerstationen (20; 30) derart verbunden ist, dass die Teilnehmerstationen (10, 20, 30) seriell miteinander kommunizieren können.

15. Verfahren zur Kommunikation in einem seriellen Bussystem (1), wobei das Verfahren die Schritte aufweist
Senden, mit einer Sende- / Empfangseinrichtung (22; 32), von Nachrichten (45; 46) auf einen Bus (40) des Bussystems (1), bei welchem Buszustände (401, 402) von Teilnehmerstationen (20, 30) des Bussystems (1) zum Senden einer Nachricht (45; 46) in einer ersten Kommunikationsphase (467) auf dem Bus (40) mit einem ersten Physical Layer erzeugt werden und in einer zweiten Kommunikationsphase (468) mit einem zweiten Physical Layer erzeugt werden, der sich von dem ersten Physical Layer unterscheidet, und/oder
Empfangen, mit der Sende- / Empfangseinrichtung (22; 32), von Nachrichten (45; 46) von dem Bus (40) des Bussystems (1),
Erfassen, mit einem Kollisionserfassungsblock (233), von Buszuständen (401, 402) auf dem Bus (40) des Bussystems (1),
Erzeugen, mit dem Kollisionserfassungsblock (233), eines Signals (S_D, rxd_SW), dessen Wert angibt, ob die Buszustände (401, 402) in der zweiten Kommunikationsphase (468) einen Pegel haben, der einer Überlagerung des ersten und zweiten Physical Layers oder einer Überlagerung von zwei zweiten Physical Layern entspricht oder nicht, und
Ausgeben, mit dem Kollisionserfassungsblock (233), des Signals (S_D, rxd_SW) für die Teilnehmerstation (20; 30).

## Claims

1. Overlap detection unit (230; 330) for a subscriber station (20; 30) in a serial bus system (1), having a collision detection block (233) for detecting bus states (401, 402) on a bus (40) of the bus system (1), for which bus states (401, 402) are produced by subscriber stations (20, 30) in the bus system (1), to send a message (45; 46), in a first communication phase (467) on the bus (40) with a first physical layer and may be produced in a second communication phase (468) with a second physical layer, which is different from the first physical layer,
wherein the collision detection block (233) is configured to generate a signal (S_D; rxd_SW), the value of which indicates whether or not the bus states (401, 402) in the second communication phase (468) have a level that corresponds to an overlap between the first and second physical layers or to an overlap between two second physical layers, and
wherein the collision detection block (233) is configured to output the signal (S_D; rxd_SW) for the subscriber station (20; 30).

2. Overlap detection unit (230; 330) according to Claim 1,
wherein the collision detection block (233) is configured to detect whether bits for a frame (460) of the message (46) have different levels than the levels in the second communication phase (468) normally have, and/or
wherein the collision detection block (233) is configured to detect whether or not two different bus states (401, 402) occur on the bus (40) in the second communication phase (468) for a digital signal for a frame (460) of the message (46).

3. Overlap detection unit (230; 330) according to Claim 1 or 2, wherein the collision detection block (233) is configured to perform a plausibility check on a detected overlap in order to decide whether the value of the signal (S_D, rxd_SW) needs to be set to a value that indicates the overlap.

4. Overlap detection unit (230; 330) according to Claim 3, wherein the collision detection block (233) is configured to perform the plausibility check using at least two different variants, which are weighted differently, in order to decide whether or not the overlap happens.

5. Overlap detection unit (230; 330) according to one of the preceding claims, moreover having a received signal selection block (234) for selecting a received signal (RX) on the basis of the signal (rxd_SW) generated by the collision detection block (233) and for outputting the selected received signal (RX) to a communication control device (21; 31) of the subscriber station (20; 30).

6. Overlap detection unit (230; 330) according to one of the preceding claims, moreover having
a data phase detection block (231) for detecting the data phase (468) of the message (46) serially transmitted on the bus (40), and/or
a sender detection block (232) for detecting whether or not the subscriber station (20; 30) is currently the sender of the message (46),
wherein the collision detection block (233) is configured to generate the signal (S_D) in response to at least one detection result that the collision detection block (233) has received from the data phase detection block (231) and/or the sender detection block (232) .

7. Overlap detection unit (230; 330) according to Claim 6,
wherein the data phase detection block (231) is configured to detect the data phase (468) by detecting a state on the bus (40), and/or
wherein the data phase detection block (231) is configured to detect the data phase (468) by evaluating a digital received signal (RXD1) that is generated from the message (46) received from the bus (40).

8. Overlap detection unit (230; 330) according to Claim 6 or 7,
wherein the sender detection block (232) is configured to evaluate a transmission signal (TX) that is sent from the subscriber station (20; 30) to the bus (40).

9. Overlap detection unit (230; 330) according to Claim 8,
wherein the sender detection block (232) is configured to evaluate the transmission signal (TX) by counting edge changes in the transmission signal (TX), and/or wherein the sender detection block (232) is configured to evaluate the transmission signal (TX) by performing sequential decoding of the transmission signal (TX), and/or
wherein the sender detection block (232) is configured to evaluate the transmission signal (TX) by comparing the transmission signal (TX) with a digital received signal (RXD1) that is generated from the message (46) received from the bus (40).

10. Overlap detection unit (230; 330) according to one of the preceding claims,
wherein
in the first communication phase, for the purpose of transmitting the message (45; 46) to the bus (40), negotiation takes place between the subscriber stations (10, 20, 30) in the bus system (1) to determine which of the subscriber stations (10, 20, 30) at least intermittently has exclusive, collision-free access to the bus (40) of the bus system (1) in the subsequent second communication phase,
wherein the second communication phase is a data phase (468) in which payload data of the message (45; 46) are transmitted on the bus (40).

11. Subscriber station (20; 30) for a serial bus system (1), having
a communication control device (21; 31) for sending a message (45; 46) to a bus (40) of the bus system (1) and/or for receiving a message (45; 46) from the bus (40) of the bus system (1),
a transmission/reception device (32; 32) for sending the message (45; 46) to the bus (40) and/or receiving the message (45; 46) from the bus (40), and
an overlap detection unit (230; 330) according to one of the preceding claims, which is interconnected with the communication control device (11; 21; 31) and the transmission/reception device (12; 22; 32),
wherein the transmission/reception device (22; 32) is configured so as, when sending at a first bit rate, to produce a first bus state (401) for a first digital data state of the messages (45; 46) and to produce a second bus state (402) for the second digital data state of the messages (45; 46) in such a way that the second bus state (402) is able to overwrite the first bus state (401), and
wherein the transmission/reception device (22; 32) is configured so as, when sending at a second bit rate, which is higher than the first bit rate, to produce different bus states (401, 402) in such a way that the bus states (401, 402) for the different digital data states of the messages (45; 46) cannot overwrite one another.

12. Subscriber station (20; 30) according to Claim 11, wherein the transmission/reception device (32; 32) is configured so as, when sending at the second bit rate, to produce different bus states (401, 402) in such a way that the bus states (401, 402) for the different digital data states of the messages (45; 46) cannot overwrite one another, or, when sending at the second bit rate, to produce the different bus states (401, 402) as when sending at the first bit rate.

13. Bus system (1), having
a bus (40) and
at least two subscriber stations (10; 20; 30), which are connected to one another via the bus (40) in such a way that they are able to communicate with one another serially and at least one subscriber station (20; 30) of which is a subscriber station (20; 30) according to Claim 11 or 12.

14. Bus system (1) according to Claim 13,
moreover having at least one additional subscriber station (10), which, to transmit the message (45) on the bus (40), is configured only to produce bus states (401, 402) on the bus (40) in a first and a second communication phase of the message (45) in such a way that the second bus state (402) is able to overwrite the first bus state (401),
wherein the at least one additional subscriber station (10) is connected to the at least two subscriber stations (20; 30) via the bus (40) in such a way that the subscriber stations (10, 20, 30) are able to communicate with one another serially.

15. Method for communication in a serial bus system (1), wherein the method comprises the steps of
sending, using a transmission/reception device (22; 32), messages (45; 46) to a bus (40) of the bus system (1), for which bus states (401, 402) are produced by subscriber stations (20, 30) in the bus system (1), to send a message (45; 46), in a first communication phase (467) on the bus (40) with a first physical layer and are produced in a second communication phase (468) with a second physical layer, which is different from the first physical layer, and/or
receiving, using the transmission/reception device (22; 32), messages (45; 46) from the bus (40) of the bus system (1),
detecting, using a collision detection block (233), bus states (401, 402) on the bus (40) of the bus system (1),
generating, using the collision detection block (233), a signal (S_D, rxd_SW), the value of which indicates whether or not the bus states (401, 402) in the second communication phase (468) have a level that corresponds to an overlap between the first and second physical layers or to an overlap between two second physical layers, and
outputting, using the collision detection block (233), the signal (S_D, rxd_SW) for the subscriber station (20; 30).

## Revendications

1. Unité de détection de recouvrement (230 ; 330) pour un poste d'abonné (20 ; 30) d'un système de bus série (1), comprenant
un bloc de détection de collision (233) servant à détecter des états de bus (401, 402) sur un bus (40) du système de bus (1), dans lequel des états de bus (401, 402) de postes d'abonné (20, 30) du système de bus (1) pour envoyer un message (45 ; 46) sont générés dans une première phase de communication (467) sur le bus (40) avec une première couche physique, et peuvent être générés dans une deuxième phase de communication (468) avec une deuxième couche physique qui est différente de la première couche physique,
le bloc de détection de collision (233) étant conçu pour générer un signal (S_D ; rxd_SW) dont la valeur indique si les états de bus (401, 402) dans la deuxième phase de communication (468) présentent un niveau qui correspond ou non à un recouvrement de la première et de la deuxième couche physique ou à un recouvrement de deux deuxièmes couches physiques, et
le bloc de détection de collision (233) étant conçu pour sortir le signal (S_D ; rxd_SW) pour le poste d'abonné (20 ; 30).

2. Unité de détection de recouvrement (230 ; 330) selon la revendication 1,
le bloc de détection de collision (233) étant conçu pour détecter si des bits pour une trame (460) du message (46) présentent d'autres niveaux que les niveaux habituels dans la deuxième phase de communication (468), et/ou
le bloc de détection de collision (233) étant conçu pour détecter si dans la deuxième phase de communication (468) deux états de bus (401, 402) différents apparaissent ou non sur le bus (40) pour un signal numérique destiné à une trame (460) du message (46) .

3. Unité de détection de recouvrement (230 ; 330) selon la revendication 1 ou 2, dans laquelle le bloc de détection de collision (233) est conçu pour effectuer un contrôle de plausibilité d'un recouvrement détecté afin de décider si la valeur du signal (S_D, rxd_SW) est à régler sur une valeur qui indique le recouvrement.

4. Unité de détection de recouvrement (230 ; 330) selon la revendication 3, dans laquelle le bloc de détection de collision (233) est conçu pour effectuer le contrôle de plausibilité à l'aide d'au moins deux variantes différentes qui sont pondérées différemment afin de décider si le recouvrement se produit ou non.

5. Unité de détection de recouvrement (230 ; 330) selon l'une quelconque des revendications précédentes, comprenant en outre un bloc de sélection de signal de réception (234) servant à sélectionner un signal de réception (RX) sur la base du signal (rxd_SW) généré par le bloc de détection de collision (233) et à sortir le signal de réception sélectionné (RX) pour un dispositif de commande de communication (21 ; 31) du poste d'abonné (20 ; 30).

6. Unité de détection de recouvrement (230 ; 330) selon l'une quelconque des revendications précédentes, comprenant en outre
un bloc de détection de phase de données (231) servant à détecter la phase de données (468) du message (46) transmis en série sur le bus (40), et/ou
un bloc de détection d'émetteur (232) servant à détecter si le poste d'abonné (20 ; 30) est ou non actuellement l'émetteur du message (46),
le bloc de détection de collision (233) étant conçu pour générer le signal (S_D) en réponse à au moins un résultat de détection que le bloc de détection de collision (233) a reçu du bloc de détection de phase de données (231) et/ou du bloc de détection d'émetteur (232) .

7. Unité de détection de recouvrement (230 ; 330) selon la revendication 6,
le bloc de détection de phase de données (231) étant conçu pour détecter un état sur le bus (40) en vue de la détection de la phase de données (468), et/ou
le bloc de détection de phase de données (231) étant conçu pour évaluer un signal de réception numérique (RXD1) qui est généré à partir du message (46) reçu par le bus (40) en vue de la détection de la phase de données (468).

8. Unité de détection de recouvrement (230 ; 330) selon la revendication 6 ou 7, dans laquelle le bloc de détection d'émetteur (232) est conçu pour évaluer un signal d'émission (TX) qui est émis du poste d'abonné (20 ; 30) au bus (40).

9. Unité de détection de recouvrement (230 ; 330) selon la revendication 8,
le bloc de détection d'émetteur (232) étant conçu pour compter les changements de flanc du signal d'émission (TX) en vue de l'évaluation du signal d'émission (TX), et/ou
le bloc de détection d'émetteur (232) étant conçu pour effectuer un décodage séquentiel du signal d'émission (TX) en vue de l'évaluation du signal d'émission (TX), et/ou
le bloc de détection d'émetteur (232) étant conçu pour comparer le signal d'émission (TX) avec un signal de réception numérique (RXD1), qui est généré à partir du message (46) reçu du bus (40), en vue de l'évaluation du signal d'émission (TX).

10. Unité de détection de recouvrement (230 ; 330) selon l'une quelconque des revendications précédentes,
dans laquelle, dans la première phase de communication, en vue de la transmission du message (45 ; 46) sur le bus (40), on négocie entre les postes d'abonné (10, 20, 30) du système de bus (1) lequel des postes d'abonné (10, 20, 30) dispose dans la deuxième phase de communication suivante au moins temporairement d'un accès exclusif, sans collision, au bus (40) du système de bus (1),
la deuxième phase de communication étant une phase de données (468) dans laquelle des données utiles du message (45 ; 46) sont transmises sur le bus (40).

11. Poste d'abonné (20 ; 30) pour un système de bus série (1), comprenant
un dispositif de commande de communication (21 ; 31) servant à envoyer un message (45 ; 46) à un bus (40) du système de bus (1) et/ou à recevoir un message (45 ; 46) provenant du bus (40) du système de bus (1),
un dispositif d'émission/réception (22 ; 32) servant à émettre le message (45 ; 46) sur le bus (40) et/ou à recevoir le message (45 ; 46) provenant du bus (40), et
une unité de détection de recouvrement (230 ; 330) selon l'une quelconque des revendications précédentes qui est interconnectée avec le dispositif de commande de communication (11 ; 21 ; 31) et le dispositif d'émission/réception (12 ; 22 ; 32),
le dispositif d'émission/réception (22 ; 32) étant conçu, lors de l'émission avec un premier débit binaire, pour générer un premier état de bus (401) pour un premier état de données numérique des messages (45 ; 46), et pour générer un deuxième état de bus (402) pour le deuxième état de données numérique des messages (45 ; 46) de telle sorte que le deuxième état de bus (402) peut écraser le premier état de bus (401), et
le dispositif d'émission/réception (22 ; 32) étant conçu, lors de l'émission avec un deuxième débit binaire qui est supérieur au premier débit binaire, pour générer différents états de bus (401, 402) de telle sorte que les états de bus (401, 402) pour les différents états de données numériques des messages (45 ; 46) ne peuvent pas s'écraser mutuellement.

12. Poste d'abonné (20 ; 30) selon la revendication 11, dans lequel le dispositif d'émission/réception (22 ; 32) est conçu, lors de l'émission avec le deuxième débit binaire, pour générer différents états de bus (401, 402) de telle sorte que les états de bus (401, 402) pour les différents états de données numériques des messages (45 ; 46) ne peuvent pas s'écraser mutuellement, ou lors de l'émission avec le deuxième débit binaire, pour générer les différents états de bus (401, 402) comme lors de l'émission avec le premier débit binaire.

13. Système de bus (1), comprenant
un bus (40), et
au moins deux postes d'abonné (10 ; 20 ; 30) qui sont reliés les uns aux autres par l'intermédiaire du bus (40) de telle sorte qu'ils peuvent communiquer en série les uns avec les autres, et dont au moins un poste d'abonné (20 ; 30) est un poste d'abonné (20 ; 30) selon la revendication 11 ou 12.

14. Système de bus (1) selon la revendication 13,
comprenant en outre au moins un poste d'abonné (10) supplémentaire qui, pour la transmission du message (45) sur le bus (40), est conçu uniquement pour générer, dans une première et une deuxième phase de communication du message (45), des états de bus (401, 402) sur le bus (40) de telle sorte que le deuxième état de bus (402) peut écraser le premier état de bus (401),
ledit au moins un poste d'abonné (10) supplémentaire étant relié par l'intermédiaire du bus (40) auxdits au moins deux postes d'abonné (20 ; 30) de telle sorte que les postes d'abonné (10, 20, 30) peuvent communiquer en série les uns avec les autres.

15. Procédé de communication dans un système de bus série (1), le procédé présentant les étapes consistant à
émettre, à l'aide d'un dispositif d'émission/ réception (22 ; 32), des messages (45 ; 46) sur un bus (40) du système de bus (1), dans lequel des états de bus (401, 402) sont générés par des postes d'abonné (20, 30) du système de bus (1) pour l'émission d'un message (45 ; 46) dans une première phase de communication (467) sur le bus (40) avec une première couche physique, et sont générés dans une deuxième phase de communication (468) avec une deuxième couche physique qui est différente de la première couche physique, et/ou
recevoir, à l'aide du dispositif d'émission/ réception (22 ; 32), des messages (45 ; 46) provenant du bus (40) du système de bus (1),
détecter, à l'aide d'un bloc de détection de collision (233), des états de bus (401, 402) sur le bus (40) du système de bus (1),
générer, à l'aide du bloc de détection de collision (233), un signal (S_D, rxd_SW) dont la valeur indique si les états de bus (401, 402) dans la deuxième phase de communication (468) présentent un niveau qui correspond ou non à un recouvrement de la première et de la deuxième couche physique ou à un recouvrement de deux deuxièmes couches physiques, et
sortir, à l'aide du bloc de détection de collision (233), le signal (S_D, rxd_SW) pour le poste d'abonné (20 ; 30) .
